# DEMANDE DE BREVET EUROPEEN

(11) **EP 3 032 468 A1**
(43) Date de publication de la demande: **15.06.2016**
(21) Numéro de dépôt: 14307003.5
(22) Date de dépôt: 11.12.2014
(51) Int. Cl.: G06K 19/077

(54) **Procédé de fabrication d'un dispositif comprenant une plage d'interconnexion filaire**

(71) Demandeur: GEMALTO SA, 92190 Meudon (FR)
(72) Inventeur: Depoutot, Frédéric, 13881 GEMENOS Cedex (FR); Le Loc'h, Alain, 13881 GEMENOS Cedex (FR); Fidalgo, Jean-Christophe, 13881 GEMENOS Cedex (FR); Dubois, Béatrice, 13881 GEMENOS Cedex (FR)

(57) **Abrégé**

L'invention concerne un procédé de fabrication d'un dispositif (1) présentant un substrat isolant (2), au moins une plage d'interconnexion (3) formée d'au moins une portion (P) ou alternance de fil conducteur sur le substrat isolant et destiné à connecter un plot conducteur (9) d'un composant électronique (15),
caractérisé en ce qu'il comprend l'étape suivante :
- impression de matière conductrice pour former une zone de connexion (3C) sur la plage d'interconnexion (4C).

L'invention concerne également le dispositif correspondant.

## Description

L'invention concerne un procédé de fabrication d'un dispositif présentant un substrat isolant et au moins une plage d'interconnexion électrique formée d'au moins une portion ou alternances de fil conducteur.

Plus particulièrement, l'invention peut concerner des dispositifs tels que des supports à puce avec ou sans antenne, des cartes à puce, des étiquettes électroniques d'identification, des passeports électroniques, des dispositifs à antenne. L'invention vise notamment des documents de voyage électroniques sans-contact (passeports électroniques et visas électroniques).

Ces dispositifs peuvent être conformes aux spécifications de l'ICAO (acronyme de l'expression anglo-saxonne "International Civil Aviation Organization") et/ou norme ISO/IEC 14443.

De tels circuits transpondeurs radiofréquence appartiennent notamment au domaine de la carte à puce sans-contact ou passeport électronique. L'antenne et une capacité notamment dans la puce forment généralement un circuit résonant. Le circuit résonant peut être passif ou actif et être relié à une puce de circuit intégré radiofréquence pour communiquer des données avec un lecteur radiofréquence.

Les transpondeurs à puce radiofréquence sont utilisés dans différents domaines économiques tels que le bancaire (porte-monnaie électronique), la communication, le transport, l'identité (e-passeport, ID-carte). Dans l'identité notamment, il est connu d'effectuer l'identification d'une personne par communication radiofréquence avec un objet électronique portable sans contact de type RFID.

On connait notamment deux procédés de fabrication principaux utilisés pour la fabrication d'insert (ou inlays) pour cartes à puce sans-contact :
- Le premier procédé consiste à incruster du fil conducteur dans un substrat et à connecter les extrémités du fil à une puce nue ou un module (comprenant un film support des plages de connexion électrique, une puce, un enrobage) par thermo compression ou ultrasons.
- Le second procédé consiste à imprimer des pistes conductrices et à connecter une puce nue par technique de puce retournée (flip-chip).

Le premier procédé est très économique pour la fabrication de l'antenne en raison du faible coût du fil de cuivre. Un module est utile notamment pour une excellente protection mécanique de la puce, mais au détriment de l'économie et de l'épaisseur générale qui est augmentée.

Le second procédé permet un insert très mince, (sans module), mais est onéreux car l'encre conductrice (souvent en argent) pour réaliser les pistes conductrices est assez chère.

Par ailleurs, il est connu de l'homme de l'art de réaliser des antennes filaires en cuivre sur des feuilles de plastique avec des terminaisons en forme de zigzag ou alternances.

Il est connu également d'effectuer une connexion électrique d'un module de carte à puce sans-contact (comprenant substrat + plages de connexion + puce + enrobage) à ces terminaisons grâce à une pâte / film de matière conductrice d'anisotropique (ACP / ACF) ou colle conductrice ou avec des bossages souples conducteurs électriques.

Il est connu de réaliser des antennes par différentes technologies d'impression notamment additive par impression de métal (sérigraphie, dépôt électrochimique) ou par métallisation soustractive lamination de film métallique sur un substrat puis gravure.

L'invention vise à résoudre les inconvénients précités.

L'invention a pour objectif d'apporter une nouvelle manière de connecter une puce à une piste conductrice en particulier une antenne, plus économique.

L'invention vise aussi à mieux protéger une carte finale contre des fissurations notamment pour du polycarbonate.

Le procédé vise à conserver de très bonnes propriétés de conduction électrique des pistes pour avoir notamment de bonnes propriétés radiofréquences d'une antenne.

L'invention vise à réduire le nombre d'étapes de fabrication et à avoir un insert plus fin.

L'invention propose un procédé simple d'exécution, facile à mettre en oeuvre dans l'immédiat et offrant différentes structures possibles.

A cet effet, l'invention a pour objet un procédé de fabrication d'un dispositif présentant un substrat isolant, au moins une plage d'interconnexion électrique formée d'au moins une portion ou alternance de fil conducteur P sur le substrat isolant et destiné à connecter un plot conducteur d'un composant électronique. Le procédé se distingue en ce qu'il comprend les étapes suivantes :
- impression de matière conductrice pour former une zone de connexion électrique sur la plage d'interconnexion.

Grâce à ces dispositions, l'invention permet de fabriquer un dispositif plus économique et plus fin avec peu d'étapes. Il est possible d'utiliser une encre moins chère avec une résistivité supérieure juste pour imprimer chaque zone de connexion électrique sur chaque plage comprenant des alternances de portions de fil conducteur ou au moins une portion de fil conducteur. L'invention prévoit par exemple d'utiliser un mélange d'argent / carbone ou mélange Argent/Cuivre ou Cuivre moins onéreux uniquement pour chaque zone de connexion à un composant.

Selon d'autres caractéristiques, le procédé comprend une étape de report et fixation du plot conducteur de composant en étant pressé contre la matière conductrice, une couche de colle anisotropique conductrice ou isolante ou conductrice isotrope ou un film adhésif anisotropique conducteur, un film adhésif non conducteur étant disposé(e) entre le plot et la matière conductrice imprimée.

De préférence la colle peut être du type anisotropique pour améliorer la connexion électrique à l'endroit du plot conducteur électrique.

La colle peut être également non conductrice et placée notamment de préférence autour du plot conducteur. Dans ce cas, les plots de connexion électrique du composant peuvent passer complètement au travers de la couche de colle pendant son report, de façon à venir contacter la couche conductrice imprimée.

Selon d'autres étapes ou caractéristiques, le procédé comprend :
- Une étape de réalisation d'un dispositif comprenant une antenne radiofréquence avec deux plages d'interconnexion électrique formées de plusieurs portions P ou alternances de fil conducteur sur le substrat isolant et destinées chacune à connecter un plot d'une puce radiofréquence ;
- Une impression de matière conductrice pour former une zone de connexion électrique de chaque plage d'interconnexion électrique,
- Un dépôt d'une couche de colle de matière conductrice anisotropique, isolante ou conductrice isotrope dans une zone de report de puce ou entre chaque plot et la matière conductrice imprimée,
- Un report et fixation d'une puce de circuit intégré sur la couche de colle, la puce ayant chaque plot pressé contre la matière conductrice de chaque plage d'interconnexion.

Ainsi, selon un aspect préféré de l'invention, on réalise un dispositif avec ou sans-contact à antenne économique et fin avec des zones de connexion positionnées précisément par rapport au substrat et l'une par rapport à l'autre.

Selon d'autres caractéristiques du procédé :
- L'impression de matière conductrice s'effectue par sérigraphie, jet de matière, jet d'encre, pulvérisation aérosol;
- Chaque zone d'interconnexion est fournie dénudée ou est dénudée notamment par usinage, laser, attaque chimique;
- L'antenne présente un croisement électriquement isolé de fils conducteurs sans court-circuit ; Toutefois, il n'est pas nécessaire de croiser les fils si on réalise un croisement conducteur nécessaire à l'aide d'une couche conductrice imprimée ;
- Alternativement, l'impression de matière conductrice réalise sensiblement en une seule étape la formation de chaque zone de connexion et au moins un croisement conducteur au dessus des pistes ;
- le procédé met en oeuvre une superposition ou lamination d'au moins une feuille ou film de couverture sur la face du substrat portant la puce ;
- La feuille ou film de couverture comprend une cavité pour recevoir la puce et éventuellement un enrobage au moins partiel de la puce ;
- Le dispositif constitue un insert pour carte à puce ou passeport.

L'invention a également pour objet un dispositif présentant un substrat isolant, au moins une plage d'interconnexion comprenant au moins une portion (P) ou alternances de fil conducteur sur le substrat isolant et connectant ou destinée à connecter un composant électronique ou électrique, caractérisé en ce qu'il comprend une couche d'impression de matière conductrice pour former une zone de connexion sur chaque plage d'interconnexion.

### Description des figures :

- La figure 1 illustre une première étape de fabrication du dispositif conforme à un mode préféré de mise en oeuvre du procédé de l'invention ;
- Les figures 2, 3, 4 illustrent différentes étapes du procédé opérées sur l'objet de la figure précédente, avec agrandissant d'une portion A, selon un mode préféré;
- La figure 5 illustre une vue en coupe partielle de la figure précédente;
- Les figures 6 et 7 illustrent différents croisements de conducteurs selon des modes de mise en oeuvre.

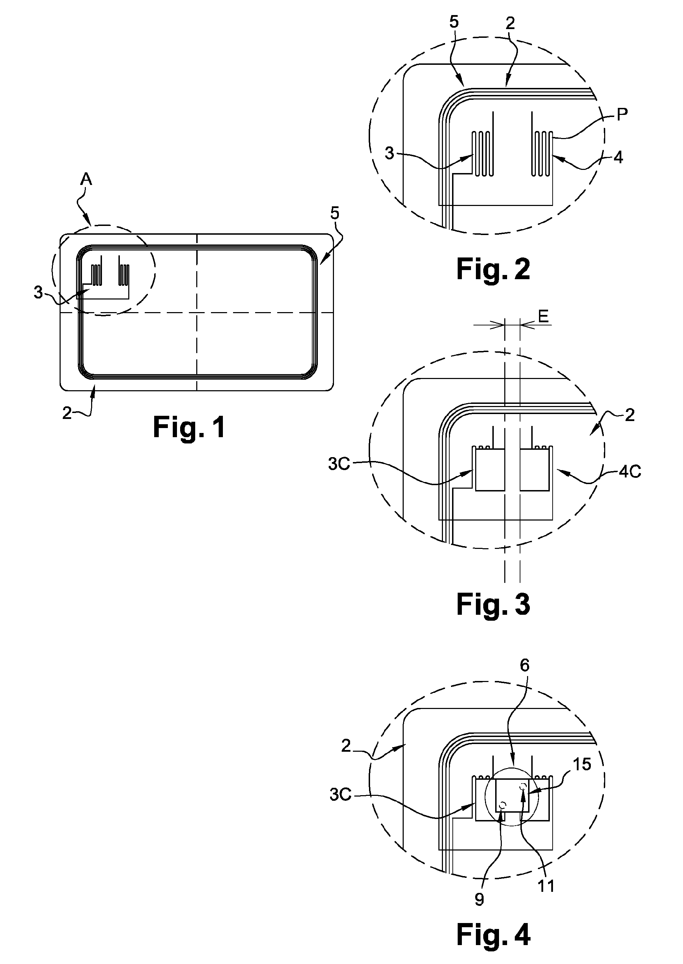

La figure 1 illustre une première étape du procédé de fabrication d'un dispositif 1 conforme à un mode de réalisation de l'invention.

Le dispositif présente un substrat isolant 2, au moins une plage d'interconnexion électrique 3, 4 formée d'au moins une portion de fil conducteur ou plusieurs portions P ou alternances (zigzags) de fil conducteur sur le substrat isolant 2. Cette plage est destinée à connecter un plot conducteur d'un composant électronique ou un composant électrique, électronique. Les plages peuvent avoir des formes différentes, triangulaire, carrée, ou alternances simples.

Dans un mode élémentaire, la plage d'interconnexion électrique peut être limitée à la surface d'une portion fil conducteur émergeant en surface d'un substrat. La portion peut être plus ou moins longue ou rectiligne, courbe selon l'encombrement ou place disponible sur le substrat.

Les alternances sont par exemple obtenues par un balayage du fil conducteur notamment en formant un zigzag sur une surface du substrat. L'espacement inter-portions de fil est par exemple inférieur à 200 à 400 µm pour des fils de diamètre de 50 à 100 µm environ.

La plage d'interconnexion 3 peut relier des pistes filaires d'un circuit électrique 5 ou électronique (ou un circuit imprimé) réalisé sur (ou accrochant) le substrat 2, tel qu'un circuit de commande d'un afficheur ou circuit d'un clavier, ou capteur d'empreinte, interrupteur, etc.

Selon une caractéristique de ce mode, le procédé comprend l'étape suivante :
1) impression de matière conductrice pour former une zone de connexion électrique sur la plage d'interconnexion. Et, de préférence, le procédé prévoit des étapes additionnelles ci-après 2 et 3 notamment pour résoudre des problèmes de fissuration au niveau du composant sur des substrats en polycarbonate.
2) dépôt ou placement d'une couche de colle de matière conductrice anisotropique ou isotropique ou non conductrice,
3) report et fixation du plot de composant sur la couche de colle anisotropique ou non conductrice.

Ainsi avec l'impression (étape n°1), l'invention permet de préparer ou parfaire une plage de connexion filaire électrique en définissant une zone de connexion électrique 3C, 4C du dispositif pour faciliter une connexion électrique ultérieure. L'impression permet notamment d'étendre, après coup, la surface de connexion disponible 3C, 4C ou de les positionner ou les redirigées avec précision, notamment sur le substrat (libre de fil conducteur en dessous) et avoir de ce fait une homogénéité de dureté du substrat (permettant notamment d'assurer la reproductibilité de l'incrustation de plot dans la matière de la matière imprimée).

De préférence, la connexion s'effectue comme indiquée ci-dessous avec d'autres étapes 2, et 3, toutefois, en l'état, l'invention permet de connecter des composants notamment en reportant par-dessus un objet ou composant (électrique, électronique) ayant également un contact d'interconnexion électrique (ohmique ou capacitif) par exemple comme expliqué ultérieurement.

Le plot 9, 11 d'un composant peut être un plot de composant de type CMS, un plot d'un écran d'afficheur, un plot d'une puce formant condensateur, un plot formé sur un mini écran de type papier électronique, un plot formé en excroissance sur un module de type carte à puce, un plot ou contact électrique d'un capteur solaire, un plot de connexion de composant électronique obtenu par formation de boule de métal sur le composant par la technologie dite « bumping », un plot de connexion d'un circuit électrique flexible etc.

Dans l'exemple illustré, comme circuit électrique, on réalise un sous-ensemble de dispositif 1 comportant une antenne radiofréquence 5 en forme de spirale, avec deux plages d'interconnexion 3, 4 formées de plusieurs portions P ou alternances de fil conducteur sur le substrat isolant 2 et destinées chacune à connecter un plot d'une puce radiofréquence.

Le dispositif 1 est ici une carte sans-contact conforme au standard ISO/IEC 14443. Il peut alternativement être de type UHF l'antenne étant formée autrement. Il est destiné à être muni d'une puce radiofréquence 15 qui sera fixée /connectée comme indiqué par la suite aux plages d'interconnexion 3, 4 dans ou sur le corps de carte formé par des feuilles intégrant le substrat 2, comme détaillé par la suite.

Le dispositif 1 peut toutefois constituer un insert (inlay) pour un passeport électronique ou autre objet sans contact comme une étiquette électronique, un badge, un ticket de transport, etc. Dans ce cas, d'autres feuilles de recouvrement peuvent venir le compléter de manière connue.

Dans l'exemple, on réalise des portions ou alternances P pour former une première 3 puis le fil d'antenne 2 de manière guidée sur le substrat 5A par incrustation de fil par ultrasons et enfin une seconde plage 4 comportant également des portions ou alternances P. Le fil peut être ou non isolé à l'extérieur par un gainage, vernis, émaillage. Dans certains cas, on peut prévoir des petites pistes s'écartant des grandes plages rectangulaires. Cette disposition permet l'appui d'autres « bump » (bossages) réalisés sur d'autres plots que ceux de connexion à l'antenne ce qui améliorera l'assise du composant.

Au niveau du croisement 8 avec les spires de l'antenne, on peut disposer d'un isolant sous la zone de croisement. On peut aussi utiliser un fil gainé d'isolant qui devra vraisemblablement être usiné pour être dénudé en surface, au niveau de la plage d'interconnexion 3, 4 si nécessaire selon une variante de mise en oeuvre ci-dessous. L'enlèvement d'un gainage isolant des fils conducteurs peut aussi s'effecteur par laser.

Alternativement, on peut réaliser la fixation du fil conducteur par technique de broderie ou couture. Le substrat 5A peut être de toute nature notamment textile, ou plastique ou papier.

Le cas échéant, le fil peut être accroché au substrat et/ou par un adhésif apporté avec le fil ou apporté autrement de l'extérieur au fil. Un apport d'énergie thermique par soufflage ou par ultrasons permet de fixer le fil sur le substrat et/ou le fil.

### Etape 1 (figure 3).

On procède à une impression de matière conductrice sur chaque plage d'interconnexion électrique 3, 4 pour former une zone 3C, 4C de connexion électrique (ohmique ou capacitive) de chaque plage d'interconnexion 3 et 4. Chaque zone 3C, 4C recouvre les portions de fils incrustés et s'étend de préférence sur le substrat en direction l'un de l'autre de manière à laisser une ligne (ou espace) de séparation de préférence calibrée entre les zones imprimées.

La matière imprimée forme une couche d'impression d'une épaisseur sensiblement calibrée allant de 0,5 µm à 25 µm. Dans le cas du jet d'encre, la couche peut être formée de points ou de tâches d'encre conductrice superposés ou se chevauchant au moins partiellement (notamment sensiblement circulaires).

Dans le cas d'une portion de fil comme plage d'interconnexion, l'impression peut s'effectuer le long du fil sur une longueur plus ou moins grande selon un niveau de conduction requis ou niveau d'assurance du contact électrique avec le fil conducteur. De préférence, le procédé prévoit d'effectuer une abrasion ou un enlèvement du gainage isolant du fil par notamment par laser, juste avant l'impression pour éviter une oxydation entre-temps.

La zone de connexion peut être réduite en largeur le long du fil. La zone peut par exemple avoir une largeur faisant le double ou triple du diamètre du fil sur un (ou deux) centimètre de long.

La zone de connexion électrique peut suivre le fil en surface et couvrir exactement le diamètre du fil ou la zone dénudée ou abrasée du fil.

La zone de connexion 3C, 4C peut s'étendre de préférence sur le substrat pour y effectuer la connexion électrique à un composant ou élément d'interconnexion à un composant.

Il est préférable d'avoir de la matière imprimée qui soit distante du fil conducteur tout en lui étant reliée pour assurer une fonction de redirection du fil (portion terminale de contact de l'antenne) dans une zone de connexion d'un composant. La zone de connexion peut être positionnée dans un endroit distant du fil directement sur le substrat (plutôt que sur le fil) pour permettre la même homogénéité de dureté du support lors d'une connexion au composant notamment ou un plot de composant.

La matière conductrice peut avoir une épaisseur de 0,5 à 2 µm si elle est déposée en jet d'encre conductrice. Toutefois, en sérigraphie la couche de matière conductrice peut avoir une épaisseur de 2 à 25 µm.

L'impression de matière conductrice peut permettre également une plus grande précision dans le positionnement des plages de connexion 3C, 4C que ne l'autorise la technologie de l'incrustation de fil conducteur.

Les cas échéant on peut réaliser une seule zone de connexion imprimée reliant deux plages d'interconnexion puis cette plage est séparée en deux de manière précise pour permettre un report et positionnement du composant ou de deux de ses plots plus aisé. Cela permet de fixer précisément la puce au bon endroit sur une séparation positionnée en dernière minute. Cela permet aussi de positionner facilement différents types de puce ayant des écartements différents de plots d'une puce à l'autre.

Dans certains cas, on peut prévoir des petites pistes de matière imprimée s'écartant des grandes plages rectangulaires. Ces pistes permettent un appui pour d'autres bossages « bump » réalisés sur d'autres plots que ceux relatifs à la connexion électrique de l'antenne de manière à améliorer l'assise de la puce.

La ligne de séparation présente une largeur E, au niveau de la zone de connexion de la puce, inférieure à un espacement existant entre des plots de puce de circuit intégré. Par exemple, il peut être de l'ordre de 0, 1 à 0,2 mm. La ligne de séparation peut être droite, brisée, courbe, tourmentée ; d'autre part l'espace E n'est pas nécessairement constant.

Les zones d'impression 3C, 4C sont ici rectangulaires. Tout autre motif d'impression autre qu'un rectangle peut convenir selon la configuration des deux plots de puce voire plus.

Le cas échéant, chaque zone 3C, 4C peut présenter une pointe de triangle faisant face à l'autre triangle ou une ligne d'amenée de connexion destinée à recevoir un plot de puce de circuit intégré. Ces pointes ou lignes peuvent favoriser un repérage par reconnaissance de forme (VAO) pour positionner et connecter une puce de circuit intégré. On peut aussi imprimer des mires de reconnaissance en même temps que le reste de la couche imprimée, que les mires soient inclues dans le motif de connexion ou externes.

Les plages filaires 3, 4 sont réalisées avec relativement peu de précision quant à leur positionnement et écartement alors que les zones conductrices imprimées le sont avec beaucoup plus de précision notamment quant à leur écartement.

Si le fil conducteur utilisé est gainé, il est préalablement dénudé localement au niveau des plages d'interconnexion notamment par abrasion mécanique (fraisage, ou tir laser) ;

L'impression de matière conductrice peut s'effectuer par sérigraphie, jet de matière (ou jet d'encre), pulvérisation (spray), aérosol, etc.

L'épaisseur de la couche d'impression peut varier notamment entre 0,5 µm et 25 µm suivant le procédé d'impression. La matière conductrice devra toutefois pouvoir épouser le relief des fils partiellement incrustés.

La matière conductrice imprimée est par exemple une encre argent ou/et cuivre ou mélange argent/carbone.

Sans être une colle conductrice, la matière imprimée ici dans l'exemple adhère au substrat. Dans l'exemple, la colle conductrice diffère de la matière conductrice imprimée en ce qu'elle est une encre. La matière imprimée (ou déposée) peut être une encre ou une pâte d'impression conçue pour accrocher sur un substrat, notamment plastique, et coalescer sur ce substrat.

La bonne résistivité est obtenue par recuit ou apport d'énergie thermique notamment parce que des paillettes ou particules de métal viennent en contact les unes sur les autres après évacuation d'un solvant ; Il peut y avoir coalescence (ou équivalent) aussi parce que des nanoparticules (ou particules) de métal fusionnent sous l'apport d'énergie. L'encre (ou matière imprimée) ne réticule pas nécessairement et ne permet pas en principe un collage de 2 éléments hétérogènes (par exemple une puce sur un substrat) mais le 'recuit' peut être finalisé après le report du composant ou pendant la lamination des couches de plastique extérieures.

Par opposition, une colle conductrice combine des charges métal et des polymères qui réticulent assurant la cohésion de la structure et la fonction collage.

Le couple substrat/encre peut être choisi pour qu'un traitement thermique permettant d'obtenir une faible résistance électrique soit compatible avec la résistance du substrat à cette température. Certains types de traitement permettent de moins chauffer le substrat qu'un passage en étuve conventionnelle ; On peut citer le four micro-onde. Ainsi les substrats utilisables peuvent être le polycarbonate, le papier, le PET. Les encres à nanoparticules permettent également d'obtenir une faible résistance électrique en chauffant pendant une durée inférieure au traitement prévue pour les encres traditionnelles à des « flocons » d'argent.

Les zones conductrices 3C, 4C peuvent être réalisées également par pulvérisation ou évaporation de matière conductrice notamment sous vide (notamment de l'aluminium).

Ainsi, grâce à l'impression, on peut reconstituer des zones de connexion électrique ; On peut également poursuivre les plages d'interconnexion 3, 4 par un circuit électrique quelconque, par exemple une piste d'antenne, une plaque de condensateur, une résistance, une self, etc.

Ainsi, sur au moins une zone de connexion 3C, 4C, reliée à une plage d'interconnexion filaire 3, 4, l'invention peut prévoir le placement d'une couche isolante (non représentée) notamment par technique d'impression, puis de superposer une autre impression conductrice électriquement de manière à former une plaque de condensateur et/ou autre zone de connexion électrique (ohmique ou capacitive).

Sur cette plaque de condensateur imprimée ou sur une piste de redirection reliée à cette plaque, il est possible de connecter un composant ou au moins un plot de puce notamment par puce retournée. L'autre plot peut être connecté directement comme décrit précédemment ou être connecté également sur une seconde plaque de condensateur formée de la même manière par impression.

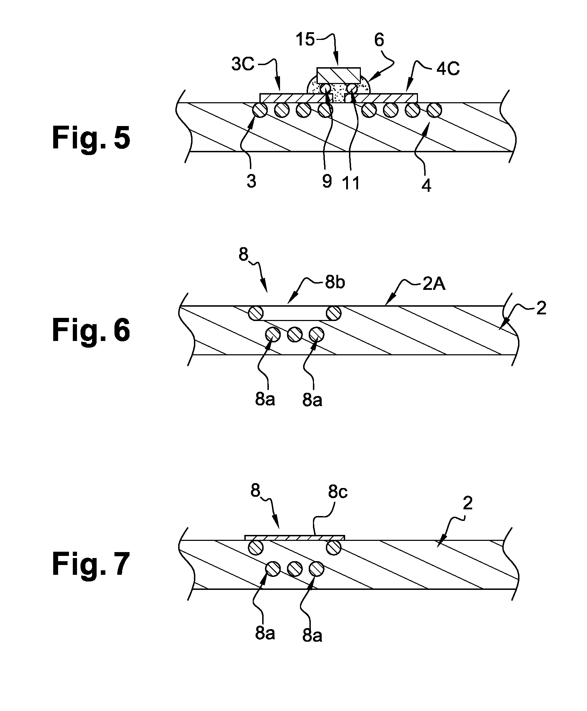

### Etape 2 (figures 4, 5).

On procède, ici dans l'exemple, au dépôt d'une couche de colle de matière conductrice anisotropique 6 dans une zone de report de puce de circuit intégré.

De manière générale, une couche notamment de colle (ou d'adhésif) peut être déposée aussi sous forme de film (comme par exemple, un adhésif anisotropique conducteur, film adhésif non conducteur.

Alternativement on peut déposer une goutte de colle non conductrice sous la puce 15, de préférence entre ses plots 9, 11 directement sur la puce ou entre les zones conductrices 3C, 4C. Si la colle isolante est déposée sous le plot (ou les plots), on effectue un pressage de manière que chaque plot de puce vienne contacter électriquement (contact ohmique) la couche conductrice imprimée.

Il est aussi possible d'utiliser de la colle conductrice isotrope (ICP). Par exemple, on plonge les plots (bumps) de la puce dans de la colle conductrice. Le procédé prévoit d'éviter un court-circuit entre les plots notamment du fait de la quantité réduite de la colle conductrice prélevée par chaque plot par exemple par une goutte de colle isolante disposée entre les plots.

Puis, la puce avec des excroissances ou plots de connexion, est reportée et pressée sur les zones d'interconnexion contre le substrat 2 de manière que les plots contactent les zones conductrices 3C, 4C (ou s'enfonce dans les zones conductrices 3C, 4C en les déformant). Le contact peut s'effectuer aussi via les particules conductrices d'une colle conductrice anisotropique 6 déposée sous forme de film ou de pâte (ACP / ACF).

De préférence, lorsque la couche d'impression conductrice est fine, par exemple 0,5 à 2µm, réalisée notamment par jet d'encre sur un substrat polymère plastique ou papier, et que le composant est fixé par colle isolante (non conductrice), le procédé prévoit de presser les plots d'un composant juste assez pour venir au contact contre la fine couche conductrice sans la perforer (auquel cas, il pourrait y avoir perte de la conduction électrique entre le plot et la couche conductrice). Une surépaisseur locale de la couche conductrice au niveau du plot de connexion peut être prévue pour contrecarrer ce phénomène. Cette surépaisseur peut être par exemple de 2 µm ou du double de la couche conductrice déposée ailleurs de manière à tolérer un cisaillement éventuel partiel de la couche conductrice sous l'effet de la pression d'un plot de puce.

Alternativement, la puce est enfoncée par pressage contre ou dans la matière conductrice imprimée. La matière conductrice 3C, 4C peut être déformée au pressage pour une meilleure conduction électrique. Les plots de puce peuvent pénétrer dans la matière imprimée notamment par sérigraphie.

A la figure 6, on a représenté un exemple de croisement de fils conducteur dans le cas où le fil utilisé est nu pour des raisons de coût.

L'antenne présente ici une zone de croisement 8 électriquement isolé de fils conducteurs 8a sans court-circuit ; Le croisement est formé notamment par différence de profondeur d'incrustation des fils 8a, 8b formant le croisement. Les fils d'antenne sont incrustés plus profondément dans la zone de croisement 8 que sur le reste du parcours de manière qu'un fil conducteur enjambant les pistes ou spires ne connecte pas les fils incrustés profondément.

En alternative, figure 7, on peut procéder à la formation d'un conducteur 8c par-dessus au moins une piste à croiser notamment par impression d'encre conductrice.

Cette dernière impression peut s'effectuer en même temps de préférence pour augmenter la cadence de production ou du moins au même poste d'impression.

Eventuellement, avant l'impression conductrice 8C, on peut prévoir une couche d'impression d'isolant (non représentée) sur les fils incrustés au niveau du croisement. On a donc dans l'ordre, une incrustation d'au moins un fil à croiser 8a sous la surface externe 2A du substrat en ayant de la matière isolante par-dessus; puis une impression de matière isolante sur au moins un fil incrusté 8a ; Puis, on imprime sur la matière isolante imprimée en surface 2A du substrat 2, au moins une piste de croisement 8c électriquement conductrice passant au-dessus au moins une piste incrustée 8a.

La puce peut présenter d'autres plots soit pour doubler la connexion soit pour d'autres fonctions. Le cas échéant, ces plots sont moins hauts que les plots de connexion pour des appuis supplémentaires. Les plots en excroissances sont réalisés par le fournisseur de puce ou peuvent être réalisés notamment par soudage de fil (stud bump).

Le dispositif ainsi obtenu ci-dessus est utilisable tel que mais, il convient de préférence de recouvrir l'ensemble par une protection telle qu'un film isolant voire une couche d'adhésif et feuille amovible.

Le dispositif peut comprendre selon le procédé préféré, une superposition ou lamination d'au moins une feuille ou film de couverture. Une couche isolante peut être également imprimée sur le dispositif 1 de préférence du côté de la puce pour la protéger.

La feuille ou film de couverture peut comprendre une cavité pour recevoir la puce et éventuellement un enrobage au moins partiel de la puce. La colle de fixation peut enrober au moins partiellement la puce sur ses flancs et contribuer à sa protection et solidité de la fixation de puce. Pour pouvoir absorber les contraintes résiduelles présentes dans la structure autour du composant, on remplira la cavité autour du composant avec une résine qui restera souple après polymérisation.

Le dispositif 1 obtenu constitue notamment un insert pour carte à puce ou passeport avec ou sans feuille ou film de recouvrement.

Le dispositif peut être fixé sur un objet quelconque notamment pour une identification comme une étiquette électronique RFID. La fixation peut s'effectuer via une couche d'adhésif ou ruban adhésif laminé ou imprimé sur le dispositif.

Grâce à l'invention, on évite une tendance à fissuration des cartes sans-contact notamment avec des feuilles en polycarbonate par suppression des matériaux rigides entrant couramment dans la composition d'un module sans-contact

(grille métallique, enrobage ou moulage avec une résine rigide). Ces matériaux rigides sont remplacés par des matériaux plus souples (encre conductrice, résine d'enrobage) aptes à absorber des contraintes apparaissant pendant une phase de lamination.

## Revendications

1. Procédé de fabrication d'un dispositif (1) présentant un substrat isolant (2), au moins une plage d'interconnexion (3) comprenant au moins une portion (P) ou alternance de fil conducteur sur le substrat isolant et destinée à connecter ou connectant un composant électronique (15),
**caractérisé en ce qu'**il comprend l'étape suivante :
- impression de matière conductrice pour former une zone de connexion (3C) sur chaque plage d'interconnexion (4C).

2. Procédé selon la revendication précédente, **caractérisé en ce qu'**il comprend les étapes suivantes :
- report et fixation du plot conducteur (9) de composant en étant pressé contre la matière conductrice, une couche de colle anisotropique conductrice (6) ou isolante ou conductrice isotrope ou un film adhésif anisotropique conducteur ou un film adhésif non conducteur étant disposé(e) entre le plot et la matière conductrice imprimée.

3. Procédé selon l'une des revendications 1 ou 2, **caractérisé en ce qu'**il comprend les étapes suivantes :
- réalisation d'une antenne radiofréquence (5) avec deux plages d'interconnexion (3, 4) formées de plusieurs portions (P) ou alternances de fil conducteur sur le substrat isolant (2) et destinées chacune à connecter un plot (9, 11) d'une puce radiofréquence (15),
- impression de matière conductrice pour former une zone de connexion (3C, 4C) de chaque plage d'interconnexion (3, 4),
- dépôt d'une couche de colle de matière conductrice anisotropique (6) ou non conductrice dans une zone de report de puce,
- report et fixation d'une puce de circuit intégré (15) sur la couche de colle anisotropique (6) isolante ou conductrice isotrope, la puce ayant chaque plot (9, 11) pressé contre la matière conductrice (3C, 4C) de chaque plage d'interconnexion (3, 4).

4. Procédé selon l'une des revendications 1 à 3, **caractérisé en ce que** l'impression de matière conductrice s'effectue par sérigraphie, jet de matière, jet d'encre, pulvérisation.

5. Procédé selon l'une des revendications 1 à 4, **caractérisé en ce que** l'impression de matière conductrice s'effectue avec une épaisseur de 0,5 µm à 25 µm.

6. Procédé selon l'une des revendications 1 à 5, **caractérisé en ce que** chaque zone d'interconnexion (3, 4) est fournie dénudée ou est dénudée notamment par usinage, laser, attaque chimique.

7. Procédé selon l'une des revendications 3 à 6, **caractérisé en ce que** l'antenne présente un croisement (8) électriquement isolé de fils conducteurs sans court-circuit, ledit croisement étant formé par :
- différence de profondeur d'incrustation des fils (8a, 8b) formant le croisement,
- formation d'un pont isolant sur au moins une piste à croiser notamment par impression d'encre isolante et impression d'au moins une piste de croisement (8c) sur le pont isolant,
- incrustation sous la surface externe du substrat d'au moins une piste (8a) à croiser en ayant de la matière isolante du substrat par-dessus et impression en surface du substrat (2) d'au moins une piste de croisement (8c) conductrice électriquement passant au-dessus d'au moins ladite piste incrustée (8a).

8. Procédé selon la revendication 3 à 7, **caractérisé en ce qu'**il réalise l'impression de matière conductrice sensiblement en une même étape pour la formation de chaque zone de connexion (3C, 4C) et pour au moins un croisement conducteur (8c) au dessus des pistes (8a).

9. Procédé selon l'une quelconque des revendications précédentes, **caractérisé en ce qu'**il comprend la superposition ou lamination d'au moins une feuille ou film de couverture.

10. Procédé selon la revendication précédente, **caractérisé en ce que** la feuille ou film de couverture comprend une cavité pour recevoir la puce et éventuellement un enrobage au moins partiel de la puce.

11. Procédé selon l'une des revendications précédentes, **caractérisé en ce qu'**il constitue un insert pour carte à puce ou passeport.

12. Dispositif (1) présentant un substrat isolant (2), au moins une plage d'interconnexion (3) comprenant au moins une portion (P) ou alternances de fil conducteur sur le substrat isolant et destinée à connecter ou connectant un composant électronique (15),
**caractérisé en ce qu'**il comprend une couche d'impression de matière conductrice pour former une zone de connexion (3C) sur chaque plage d'interconnexion (4C).

13. Dispositif (1) selon la revendication précédente, **caractérisé en ce que** l'impression de matière conductrice a une épaisseur de 0,5 à 25 µm.
